# EUROPEAN PATENT SPECIFICATION

(11) **EP 3 964 012 B1**
(45) Date of publication and mention of the grant of the patent: **03.12.2025**
(21) Application number: 20724027.6
(22) Date of filing: 30.04.2020
(51) Int. Cl.: H04W 74/0808, H04W 36/06

(54) **HANDLING DETECTION OF A PROBLEM IN UNLICENSED FREQUENCY SPECTRUM**
HANDHABUNG DER ERKENNUNG EINES PROBLEMS IN EINEM UNLIZENZIERTEN FREQUENZSPEKTRUM
GESTION DE LA DÉTECTION D'UN PROBLÈME DANS UN SPECTRE DE FRÉQUENCE SANS LICENCE

(30) Priority: 02.05.2019 US 201962842411 P
(43) Date of publication of application: 09.03.2022
(73) Proprietor: Telefonaktiebolaget LM Ericsson (publ), 164 83 Stockholm (SE)
(72) Inventor: WANG, Min, 97753 LULEÅ (SE)
(74) Representative: Ericsson
(86) International application number: PCT/EP2020/062003
(87) International publication number: WO 2020/221850

(56) References cited:
- US-A1- 2018 288 623
- ZTE: "Considerations on mobility for NR-U", vol. RAN WG2, no. Montreal, Canada; 20180702 - 20180706, 1 July 2018 (2018-07-01), XP051467090, Retrieved from the Internet <URL:http://www.3gpp.org/ftp/Meetings%5F3GPP%5FSYNC/RAN2/Docs> [retrieved on 20180701]
- ZTE: "Simulation and Evaluation for RLM/RLF on NR-U", vol. RAN WG2, no. Gothenburg, Sweden; 20180820 - 20180824, 10 August 2018 (2018-08-10), XP051520950, Retrieved from the Internet <URL:http://www.3gpp.org/ftp/tsg%5Fran/WG2%5FRL2/TSGR2%5F103/Docs/R2%2D1811286%2Ezip> [retrieved on 20180810]
- QUALCOMM INCORPORATED: "Report of Email Discussion [105#48][NR-U] Connected mode measurements", vol. RAN WG2, no. Xian, China; 20190408 - 20190412, 6 April 2019 (2019-04-06), XP051709628, Retrieved from the Internet <URL:http://www.3gpp.org/ftp/tsg%5Fran/WG2%5FRL2/TSGR2%5F105bis/Docs/R2%2D1903655%2Ezip> [retrieved on 20190406]

## Description

### TECHNICAL FIELD

The present application relates generally to wireless communication, and relates more particularly to the handling of the detection of a problem with wireless communication in unlicensed frequency spectrum.

### BACKGROUND

Before a transmitter is allowed to transmit within unlicensed frequency spectrum, the transmitter generally must determine that the spectrum is clear, e.g., based on a channel sensing procedure. If the spectrum is not clear, the transmitter may back off for a certain amount of time before attempting to clear the spectrum again. Although this backoff mechanism contributes to latency, exploiting unlicensed frequency spectrum in this way still alleviates demand placed on licensed frequency spectrum so as to realize improved system performance.

Challenges nonetheless exist in how to handle problems within the unlicensed frequency spectrum, especially when those problems persist. For example, challenges exist in how to handle persistent failure to clear the unlicensed frequency spectrum.

US2018/288623 A1 discusses a method of communication including sending information on a first radio frequency (RF) spectrum and receiving a trigger to switch to a second RF spectrum, and especially switching from an unlicensed spectrum to a licensed spectrum.

### SUMMARY

It is an object of the present invention to mitigate some problems with respect to switching between different communication channels in the unlicensed frequency spectrum.

This object is achieved by the independent claims. Advantageous embodiments are described in the dependent claims and by the following description.

### BRIEF DESCRIPTION OF THE DRAWINGS

Figure 1 is a block diagram of a wireless communication system according to some embodiments.
Figure 2 is a logic flow diagram of a method performed by a wireless device according to some embodiments.
Figure 3 is a logic flow diagram of a method performed by a network node according to some embodiments.
Figure 4 is a block diagram of a wireless device according to some embodiments.
Figure 5 is a block diagram of a network node according to some embodiments.
Figure 6 is a block diagram of the coverages of a New Radio uplink carrier and a supplemental uplink carrier in a New Radio cell, according to some embodiments.
Figure 7 is a block diagram of a wireless communication network according to some embodiments.
Figure 8 is a block diagram of a user equipment according to some embodiments.
Figure 9 is a block diagram of a virtualization environment according to some embodiments.
Figure 10 is a block diagram of a communication network with a host computer according to some embodiments.
Figure 11 is a block diagram of a host computer according to some embodiments.
Figure 12 is a flowchart illustrating a method implemented in a communication system, in accordance with one embodiment.
Figure 13 is a flowchart illustrating a method implemented in a communication system, in accordance with one embodiment.
Figure 14 is a flowchart illustrating a method implemented in a communication system, in accordance with one embodiment.
Figure 15 is a flowchart illustrating a method implemented in a communication system, in accordance with one embodiment.

### DETAILED DESCRIPTION

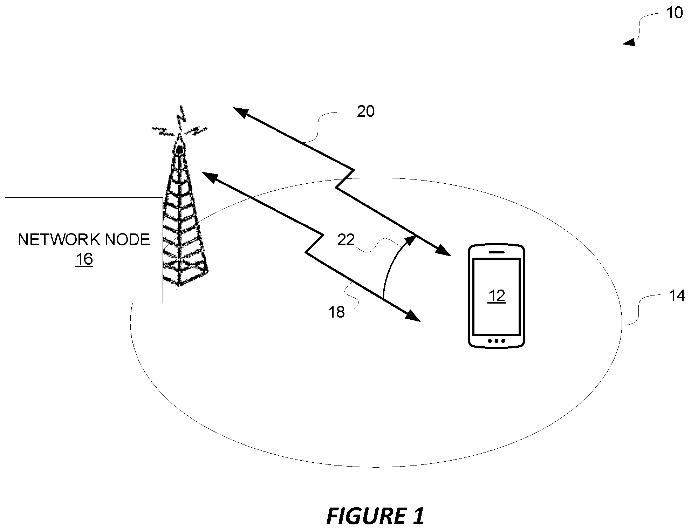

Figure 1 shows a wireless communication system 10 according to some embodiments. The system 10 in some embodiments is a New Radio (NR) system. The system 10 includes a wireless device 12, e.g., a user equipment (UE). The wireless device 12 is shown as being served by a cell 14 provided by a network node 16 (e.g., a base station).

The wireless device 12 is configured to transmit uplink transmission(s) in the cell 14 and/or to receive downlink transmission(s) in the cell 14. The uplink transmission(s) may for instance be one or more transmissions of a random access procedure, a physical uplink shared channel, or a physical uplink control channel. Regardless, the wireless device 12 is configured to transmit or receive on any of multiple channels, subbands, bandwidth parts, carriers, cells, or frequency bands, at least one of which may be deployed within unlicensed frequency spectrum. Figure 1 for example shows that the multiple channels, subbands, bandwidth parts, carriers, cells, or frequency bands includes a first channel, subband, bandwidth part, carrier, cell, or frequency band 18 as well as a second channel, subband, bandwidth part, carrier, cell, or frequency band 20. The first channel, subband, bandwidth part, carrier, cell, or frequency band 18 is deployed in unlicensed frequency spectrum. The unlicensed frequency spectrum is frequency spectrum within which transmissions may be performed without a license from a licensor (which may be a regulatory or governing entity, e.g., the United States Federal Communications Commission, FCC, or the International Telecommunication Union, ITU). In some embodiments where the first channel, subband, bandwidth part, carrier, cell, or frequency band 18 is a carrier in an NR system, the carrier may be a New Radio uplink carrier (NUL).

In some embodiments, the second channel, subband, bandwidth part, carrier, cell, or frequency band 20 is also deployed in unlicensed frequency spectrum. In other embodiments, though, the second channel, subband, bandwidth part, carrier, cell, or frequency band 20 is deployed in licensed frequency spectrum. For example, in one such embodiment where the second channel, subband, bandwidth part, carrier, cell, or frequency band 20 is a carrier deployed in licensed frequency spectrum, the carrier may be a supplementary uplink carrier (SUL).

In some embodiments, the wireless device 12 detects a problem on the first channel, subband, bandwidth part, carrier, cell, or frequency band 18 deployed with unlicensed frequency spectrum. For example, the problem may be consistent listen-before-talk (LBT) failure on the first channel, subband, bandwidth part, carrier, cell, or frequency band 18, e.g., as defined by a measure of LBT failure consistency. The consistent LBT failure may be consistent uplink (UL) LBT failure.

For example, consistent LBT failure may occur on the first channel, subband, bandwidth part, carrier, cell, or frequency band 18 when LBT failures happen consistently on that first channel, subband, bandwidth part, carrier, cell, or frequency band 18. Here, an LBT failure may happen when the LBT procedure, that the wireless device 12 performs as a prerequisite to an uplink transmission, fails, i.e., because the channel is detected as already occupied. In some embodiments, the UL LBT failures that contribute to the wireless device 12 detecting consistent UL LBT failure include UL LBT failures for any type of uplink transmission, e.g., including multiple different types such as a sounding reference signal transmission, a control channel transmission, a data channel transmission, and/or a random access channel transmission.

More particularly in this regard, consistent UL LBT failure monitoring may employ the use of a timer and a counter. The timer may be referred to as an UL LBT failure counter, and the timer may be referred to as the inter-failure duration timer. The wireless device 12 may use the UL LBT failure counter to count the number of UL LBT failures that occur, e.g., across all types of uplink transmissions. The wireless device 12 may use the inter-failure duration timer to reset the counter when the UL LBT failures are not consistent, e.g., when no UL LBT failure occurs for at least a threshold amount of time. If or when the UL LBT failure counter reaches a threshold, the wireless device 12 may consider itself as having detected consistent LBT failure on the first channel, subband, bandwidth part, carrier, cell, or frequency band 18. Accordingly, in some embodiments, consistent UL LBT failure may be detected by counting (consecutive) uplink LBT failure indications and identifying when the counted number of uplink LBT failure indications reaches a certain maximum allowed number.

In these and other embodiments, then, the wireless device 12 may detect the problem by detecting that a measure of channel occupancy within and/or clear channel assessment failure within the first channel, subband, bandwidth part, carrier, cell, or frequency band 18 exceeds an occupancy or failure threshold, e.g., as configured by the network node 16. The measure may for instance be a function of (i) a ratio of failed clear channel assessments to total clear channel assessments; (ii) a number of consecutive clear channel assessment failures; and/or (iii) a level of channel occupancy. Where the measure is a function of a number of consecutive clear channel assessment failures, for instance, such number may be reflected by the UL LBT failure counter described above.

Regardless, responsive to detecting the problem, the wireless device 12 is configured to perform or request a switch 22 to a different channel, subband, bandwidth part, carrier, cell, or frequency band; namely, the second channel, subband, bandwidth part, carrier, cell, or frequency band 20 in Figure 1's example. In some embodiments, for example, the wireless device 12 may request the switch 22 by performing an uplink transmission on the different channel, subband, bandwidth part, carrier, cell, or frequency band 20. The uplink transmission may be a sounding reference signal, a random access transmission, a physical uplink control channel transmission, or a physical uplink shared channel transmission. Alternatively or additionally, the uplink transmission may indicate or include a problem report that reports the detected problem, e.g., whereby the problem report implicitly requests the switch 22.

In any event, the switch 22 may be implemented at a granularity that depends on a granularity with which the problem was detected, i.e., that depends on whether the problem was detected on a channel, subband, bandwidth part, carrier, cell, or frequency band. For example, in some embodiments where the problem is detected on a cell, the switch 22 may be performed as cell reselection or handover so as to switch to a different cell. Similarly, where the problem is detected on a channel, the switch 22 may be performed to a different channel; where the problem is detected on a subband, the switch may be performed to a different subband, and so forth.

In some embodiments, the wireless device 12 performs the switch 22 autonomously or upon the network node 16 granting a request by the wireless device 12 to perform the switch 22. In other embodiments, the wireless device 12 simply transmits a problem report that reports the detected problem. In some of these embodiments, the network node 16 may, based on the report, switch the wireless device 12 to the different channel, subband, bandwidth part, carrier, cell, or frequency band 20. In this case, then, the switch 22 may be initiated or triggered by the network node 16, based on the wireless device's report, e.g., as opposed to having been initiated by the wireless device's request for the switch.

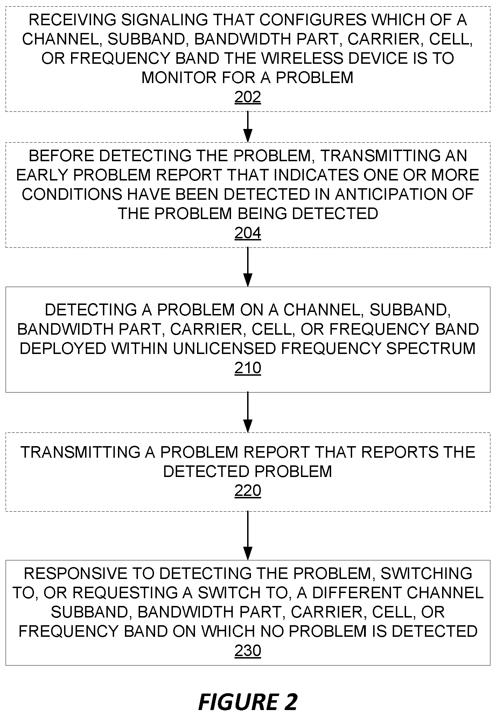

In view of the above modifications and variations, Figure 2 depicts a method performed by a wireless device 12 in accordance with particular embodiments. The method includes detecting a problem on a channel, subband, bandwidth part, carrier, cell, or frequency band 18 deployed within unlicensed frequency spectrum (Block 210). In some embodiments, the problem is consistent listen-before-talk (LBT) failure on the channel, subband, bandwidth part, carrier, cell, or frequency band, as defined by a measure of LBT failure consistency. The consistent LBT failure may be consistent uplink LBT failure. Alternatively or additionally, detecting the problem may comprise detecting that a measure of channel occupancy within and/or clear channel assessment failure within the channel, subband, bandwidth part, carrier, cell, or frequency band exceeds an occupancy or failure threshold. Regardless, the method may also include, responsive to detecting the problem, switching to, or requesting a switch to, a different channel subband, bandwidth part, carrier, cell, or frequency band 20, e.g., on which no problem is detected (Block 230).

In some embodiments, the method includes transmitting a problem report that reports the detected problem (Block 220). In fact, in some embodiments, requesting the switch comprises performing an uplink transmission on the different channel subband, bandwidth part, carrier, cell, or frequency band. This uplink transmission may indicate or include a problem report that reports the detected problem.

In some embodiments, the method further includes receiving signaling that configures which of a channel, subband, bandwidth part, carrier, cell, or frequency band the wireless device is to monitor for a problem (Block 202). Alternatively or additionally, the method may include before detecting the problem, transmitting an early problem report that indicates one or more conditions have been detected in anticipation of the problem being detected (Block 204).

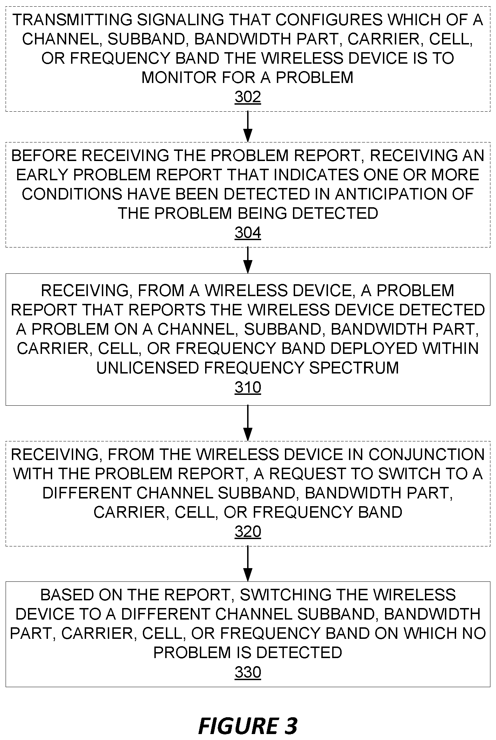

Figure 3 depicts a method performed by a network node 16 in accordance with other particular embodiments. The method includes receiving, from a wireless device 12, a problem report that reports the wireless device 12 detected a problem on a channel, subband, bandwidth part, carrier, cell, or frequency band 18 deployed within unlicensed frequency spectrum (Block 310). In some embodiments, the problem is consistent listen-before-talk (LBT) failure on the channel, subband, bandwidth part, carrier, cell, or frequency band, as defined by a measure of LBT failure consistency. The consistent LBT failure may be consistent uplink LBT failure. Alternatively or additionally, the report indicates that a measure of channel occupancy within and/or clear channel assessment failure within the channel, subband, bandwidth part, carrier, cell, or frequency band exceeds an occupancy or failure threshold. Regardless, the method may also include, based on the report, switching the wireless device 12 to a different channel subband, bandwidth part, carrier, cell, or frequency band 20, e.g., on which no problem is detected (Block 330).

In fact, in some embodiments, the method includes receiving, from the wireless device in conjunction with the problem report, a request to switch to a different channel subband, bandwidth part, carrier, cell, or frequency band (Block 320).

In some embodiments, the method further includes transmitting signaling that configures which of a channel, subband, bandwidth part, carrier, cell, or frequency band the wireless device is to monitor for a problem (Block 302). Alternatively or additionally, the method may include before receiving the problem report, receiving an early problem report that indicates one or more conditions have been detected in anticipation of the problem being detected (Block 304).

Note that the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

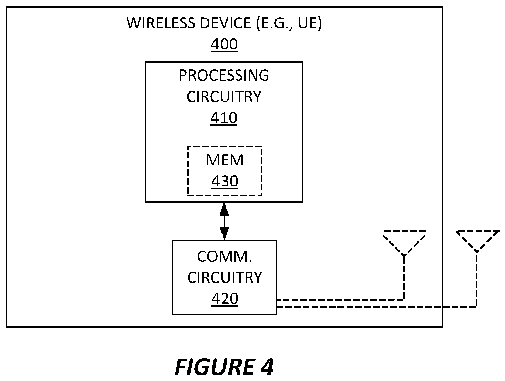

Figure 4 for example illustrates a wireless device 400 (e.g., wireless device 12) as implemented in accordance with one or more embodiments. As shown, the wireless device 400 includes processing circuitry 410 and communication circuitry 420. The communication circuitry 420 (e.g., radio circuitry) is configured to transmit and/or receive information to and/or from one or more other nodes, e.g., via any communication technology. Such communication may occur via one or more antennas that are either internal or external to the wireless device 400. The processing circuitry 410 is configured to perform processing described above, e.g., in Figure 2, such as by executing instructions stored in memory 430. The processing circuitry 410 in this regard may implement certain functional means, units, or modules.

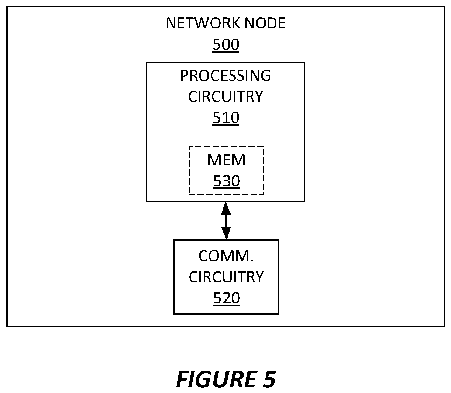

Figure 5 illustrates a network node 500 (e.g., network node 16) as implemented in accordance with one or more embodiments. As shown, the network node 500 includes processing circuitry 510 and communication circuitry 520. The communication circuitry 520 is configured to transmit and/or receive information to and/or from one or more other nodes, e.g., via any communication technology. The processing circuitry 510 is configured to perform processing described above, e.g., in Figure 3, such as by executing instructions stored in memory 530. The processing circuitry 510 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

Next generation systems are expected to support a wide range of use cases with varying requirements ranging from fully mobile devices to stationary Internet of Things (IoT) or fixed wireless broadband devices. The traffic pattern associated with many use cases is expected to consist of short or long bursts of data traffic with varying length of waiting period in between (here called inactive state). In New Radio (NR), both license assisted access and standalone unlicensed operation are to be supported in 3GPP. Hence the procedure of Physical Random Access Channel (PRACH) transmission and/or Scheduling Request (SR) transmission in unlicensed spectrum shall be investigated in 3GPP. In the following, NR Unlicensed (NR-U) and channel access procedure for a unlicensed channel based on Listen-Before-Talk (LBT) is introduced.

### NR-U introduction

In order to tackle with the ever increasing data demanding, NR is considered for both licensed and unlicensed spectrum. NR-U needs to support dual connectivity (DC) and standalone scenarios, where the Medium Access Control (MAC) procedures including the Random Access Channel (RACH) and scheduling procedure on unlicensed spectrum are subject to the LBT failures. There was no such restriction in Long Term Evolution (LTE) Licensed-Assisted Access (LAA), since there was licensed spectrum in LAA scenario so the RACH and scheduling related signaling can be transmitted on the licensed spectrum instead of unlicensed spectrum.

For NR-U, channel sensing should be applied to determine the channel available before a physical signal is transmitted using the channel. This is the case for discovery reference signal (DRS) transmission such as Primary Synchronization Signal (PSS), Secondary Synchronization Signal (SSS), Physical Broadcast Channel (PBCH), and Channel State Information Reference Signal (CSI-RS), control channel transmission such as Physical Uplink Control Channel (PUCCH) and Physical Downlink Control Channel (PDCCH), physical data channel such as Physical Uplink Shared Channel (PUSCH) and Physical Downlink Shared Channel (PDSCH), and uplink sounding reference signal (SRS) such as SRS transmission.

The radio resource management (RRM) procedures in NR-U would be generally rather similar as in LAA, since NR-U is aiming to reuse LAA/eLAA/feLAA technologies as much as possible to handle the coexistence between NR-U and other legacy radio access technologies (RATs). RRM measurements and report comprising special configuration procedure with respect the channel sensing and channel availability.

Hence, channel access/selection for LAA was one of the important aspects for co-existence with other RATs such as Wi-Fi. For instance, LAA has aimed to use carriers that are congested with Wi-Fi..

In licensed spectrum, a UE measures Reference Signal Received Power (RSRP) and Reference Signal Received Quality (RSRQ) of the downlink radio channel, and provides the measurement reports to its serving eNB/gNB. However, they don't reflect the interference strength on the carrier. Another, metric Received Signal Strength Indicator (RSSI), can serve for such purpose. At the eNB/gNB side, it is possible to derive RSSI based on the received RSRP and RSRQ reports. However, this requires that they must be available. Due to the LBT failure, some reports in terms of RSRP or RSRP may be blocked (can be either due to that the reference signal transmission (DRS) is blocked in the downlink or the measurement report is blocked in the uplink). Hence, the measurements in terms of RSSI are very useful. The RSSI measurements together with the time information concerning when and how long time that UEs have made the measurements can assist the gNB/eNB to detect the hidden node. Additionally, the gNB/eNB can measure the load situation of the carrier which is useful for the network to prioritize some channels for load balance and channel access failure avoidance purposes.

LTE LAA has defined to support measurements of averaged RSSI and channel occupancy) for measurement reports. The channel occupancy is defined as percentage of time that RSSI was measured above a configured threshold. For this purpose, a RSSI measurement timing configuration (RMTC) includes a measurement duration (e.g. 1-5 ms) and a period between measurements (e.g. {40, 80, 160, 320, 640} ms).

### Channel access procedure in NR unlicensed spectrum

Listen-before-talk (LBT) is designed for unlicensed spectrum co-existence with other radio access technologies (RATs). In this mechanism, a radio device applies a clear channel assessment (CCA) check (i.e. channel sensing) before any transmission. The transmitter involves energy detection (ED) over a time period compared to a certain threshold (ED threshold) in order to determine if a channel is idle. In case the channel is determined to be occupied, the transmitter performs a random back-off within a contention window before its next CCA attempt. In order to protect the ACK transmissions, the transmitter must defer a period after each busy CCA slot prior to resuming back-off. As soon as the transmitter has grasped access to a channel, the transmitter is only allowed to perform transmission up to a maximum time duration (namely, the maximum channel occupancy time (MCOT)). For QoS differentiation, a channel access priority based on the service type has been defined. For example, there are four LBT priority classes are defined for differentiation of contention window sizes (CWS) and MCOT between services.

As described in 3GPP TR 38.889 v16.0.0, the channel access schemes for NR-based access for unlicensed spectrum can be classified into the following categories:
Category 1: Immediate transmission after a short switching gap. This is used for a transmitter to immediately transmit after an UL/DL switching gap inside a COT. The switching gap from reception to transmission is to accommodate the transceiver turnaround time and is no longer than 16 µs.
Category 2: LBT without random back-off. The duration of time that the channel is sensed to be idle before the transmitting entity transmits is deterministic.
Category 3: LBT with random back-off with a contention window of fixed size. The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.
Category 4: LBT with random back-off with a contention window of variable size. The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes can be used.

There currently exist certain challenge(s). A mechanism should be adopted (e.g., at the MAC level) to handle UL LBT failure, where "consistent" UL LBT failures (at least for UL transmissions of SR, RACH, PUSCH) are used for problem detection. A mechanism should also be adopted for DL RS loss, i.e., DL LBT failure. For example, an RLM measurement window for serving cell RLM measurements based on Synchronization Signal Blocks (SSBs) in the DRS may be supported for in-sync and out-of-sync evaluations. Challenges exist (i) in how an RLM measurement window is indicated or determined and its relation to DRS transmission window; (ii) whether or not an SSB can fall outside the measurement window and, if so, whether it can be used for in-sync and out-of-sync evaluations; (iii) whether there is any relationship of RLM measurements based on Channel State Information Reference Signal (CSI-RS) to the measurement window; and (iv) in whether there should be a mechanism to handle missing RLM-RS due to LBT failure.

Accordingly, challenges exist in defining a new mechanism in NR-U for detection of UL LBT problems, and how to handle missing RLM-RS due to DL LBT failure. These challenges are accompanied with complexities regarding defining UE behaviors upon detection of an UL LBT problem. In other words, complexities exist regarding defining the potential recovery actions for the UE upon detection of an LBT problem.

Certain aspects of the present disclosure and their embodiments may provide solutions to these or other challenges. Detailed UE behaviors upon detection of a LBT problem/RLF are proposed for unlicensed spectrum operation. LBT problem detection may be performed by a UE with different granularities. In other words, LBT problem detection may be performed per LBT subband/channel, per BWP, per carrier/cell, or per frequency band. Upon detection of an LBT problem, different recovery options may be applied depending on the granularity/case in which the LBT problem has been detected. The proposed recovery options are not exclusively applied. For example, they may be executed sequentially or in parallel on an as-needed basis.

Certain embodiments may provide one or more of the following technical advantage(s). Some embodiments define components for a mechanism for LBT failure handling, provide a more efficient recovery option for a UE upon detection of a LBT problem, and/or enable fast recovery to reduce the user plane latency and interruption due to LBT failures.

The below embodiments are described in the context of NR unlicensed spectrum (NR-U). The embodiments however are not limited to NR-U scenarios. They are also applicable to other unlicensed operation scenarios such as LTE LAA/eLAA/feLAA. In the below embodiments, an LBT problem is used as an example term, to represent an event that a UE has experienced consecutive LBT failures. The other terms (such as RLF, subband/channel problem, etc.) are equally applicable.

As a first embodiment, LBT problem detection may be performed by a UE with different granularities, In other words, LBT problem detection may be performed per LBT subband/channel, per BWP, per carrier/cell, or per frequency band. Upon detection of an LBT problem, different recovery option may be applied depending on the granularity/case in which the LBT problem has been detected.

Option 1 for LBT problem detection per subband within a BWP: the UE uses other subbands where the UE doesn't detect LBT problem in case the UE has detected LBT problem for transmissions/receptions on one subband.

Option 2 for LBT problem detection per BWP: in this case, the BWP may comprise just one LBT subband, and the UE may be configured with several BWPs. If the UE experiences an LBT problem in its current active BWP, the UE may request to do a BWP switch. The UE may request a BWP switch by initiating an UL transmission (such as SRS, RA, or PUCCH, or PUSCH in case the UE is configured with a grant on that BWP) carrying an LBT problem report on one or more other BWPs. The transmission may carry a failure reason indicating that the UE is experiencing a LBT problem on its current active BWP. Upon reception of the transmission, the gNB can decide if the UE can switch to another inactive BWP, since the gNB is aware of which other BWP(s) may be free of an LBT problem.

Option 3 for LBT problem detection per cell (in which the UE is configured with only one BWP): in this case, the UE has to trigger RLF recovery, i.e., RRC connection reestablishment. The RRC connection reestablishment can carry a failure reason indicating that the UE is experiencing an LBT problem in its serving cell. The UE may be able to reestablish its RRC connection while remaining in RRC connected mode; otherwise, the UE goes to RRC idle, where the UE can do a cell selection/reselection among multiple neighbor cells, depending on knowledge of LBT failure measurements or channel occupancy measurements. After selection of a suitable cell, the UE can setup a new RRC connection to that cell. The recovered cell may or may not belong to the same frequency band with the cell that has detected an LBT problem.

Option 4: the UE is configured with carrier aggregation (CA) (either UL or DL). If the UE has detected an LBT problem in a primary cell, the UE may trigger RRC connection reestablishment for the Primary Cell (PCell) or a handover to change PCell. In this case, the UE may be ordered to inactivate all Secondary Cells (SCells) before RRC connection reestablishment or handover is initiated. If the UE has detected an LBT problem in an SCell, the UE sends an UL transmission such as SRS, RA, PUCCH, or PUSCH in another cell such as PCell, or another SCell. The transmission may carry an LBT problem report, indicating that the UE has detected an LBT problem on an SCell. Upon detection of the failure/problem report, the gNB may decide to inactivate the SCell with detection of an LBT problem. Meanwhile, the gNB may add a new SCell to the UE.

Option 5: the UE is configured with multi-connectivity, meaning that a master cell group (MCG) and at least one secondary cell group (SCG) configured for the UE. One example of multi-connectivity is dual connectivity (DC). In case the UE detects an LBT problem in a primary cell (PCell or Primary SCell, PSCell), the UE may perform RRC connection reestablishment or a handover to change the primary cell. In case the UE has detected an LBT problem in an SCell, if the SCell belongs to MCG, the UE may trigger an UL transmission such as SRS, RA, PUCCH, or PUSCH on another serving cell in MCG to carry a LBT failure/problem report. If the SCell belongs to the SCG, the UE may trigger an UL transmission such as SRS, RA, PUCCH, or PUSCH on another serving cell in the SCG to carry an LBT failure/problem report. In case an RRC signaling message is sent to carry an LBT failure/problem report, the message may be sent on a Signaling Radio Bearer (SRB) connected to the secondary gNB (or SeNB). As another choice, the UE may reuse SCG failure information to carry an LBT failure/problem report.

Option 6: early LBT failure/problem report: for any of the above options, an early LBT failure/problem report may be triggered. In this case, this early report may be sent in the subband/channel/BWP/carrier/cell where an LBT problem is going to be triggered.

As a second embodiment, recovery options defined in the first embodiment are not exclusively applied. In one example, if a UE is configured with a wideband BWP comprising multiple subbands/channels, the UE may first perform Option 1 for a subband/channel, if the UE detects a LBT problem in a subband/channel. The UE may further perform Option 2 for the BWP in case the UE has detected an LBT problem on all subband/channels. In the second example, subject of the claims, if a UE is configured with several BWPs, the UE first applies Option 2 in case the UE has detected an LBT problem in an active BWP. The UE further applies Option 3 in case the UE has detected an LBT problem in all configured BWPs in the cell.

As a third embodiment, which options are applicable for a UE is configured by the network via signaling means such as an Radio Resource Control (RRC) signaling, a Medium Access Control (MAC) Control Element (CE), or other Layer 1 (L1) signaling means such as a Downlink Control Information (DCI).

Consider now additional details of some embodiments where the first channel, subband, bandwidth part, carrier, cell, or frequency band 18 is a New Radio uplink (NUL) carrier. In some of these embodiments, consistent LBT failure on one subband or BWP of the NUL carrier triggers a switch to a different subband or BWP of the same NUL carrier. In others of these embodiments, the second channel, subband, bandwidth part, carrier, cell, or frequency band 20 is a supplementary uplink (SUL) carrier, such that consistent LBT failure on the NUL carrier triggers a switch to the SUL carrier.

More particularly, in NR-U, it has been identified to be beneficial to provide more transmission opportunities for a UE to mitigate the negative impact imposed by LBT failures. The following scenarios are possible in NR-U:
- Scenario A: Carrier aggregation between licensed band NR (PCell) and NR-U (SCell). The NR-U SCell may have both DL and UL, or DL-only. In this scenario, NR PCell is connected to 5G-CN.
- Scenario B: Dual connectivity between licensed band LTE (PCell) and NR-U (PSCell). In this scenario, LTE PCell connected to the Evolved Packet Core (EPC) as higher priority than PCell connected to 5G-CN.
- Scenario C: Stand-alone NR-U. In this scenario, NR-U is connected to 5G-CN.
- Scenario D: A stand-alone NR cell in unlicensed band and UL in licensed band (single cell architecture). In this scenario, NR-U is connected to 5G-CN.
- Scenario E: Dual connectivity between licensed band NR and NR-U. In this scenario, PCell is connected to 5G-CN.
RP-182878, New WID on NR-based Access to Unlicensed Spectrum, Qualcomm Inc.

In NR-U, as defined in Scenario D, it is feasible to deploy the SUL carrier to provide additional frequency division multiplexing (FDM) resources for the UE so that it is beneficial to minimize the negative impact of LBT failures on UL transmissions.

Below are discussed aspects on how to deploy the SUL carrier in an NR-U cell accordingly.

Consider SUL in NR licensed. As the low carrier frequency bands were already deployed with 2G, 3G and 4G wireless communication systems, NR will be deployed at relatively higher frequencies. For wireless communication, the propagation loss will be roughly proportional to the square of the carrier frequency. Hence there can be coverage issue for wireless communication over high carrier frequencies. For downlink, the gNB can be equipped with powerful antenna systems and powerful amplifiers to boost the transmission power density, hence the DL coverage can be boosted. However, for UL, there are several restrictions such as transmit power, antenna size and cost. Hence there can be mismatch between UL and DL for a NR cell at high frequency.

For solving this, NR introduced a supplementary uplink (SUL) carrier for a NR cell, i.e. a NR cell has a SUL carrier plus a NR UL carrier. The SUL carrier is supposed to be a low frequency carrier which can be shared (in time and/or frequency domain) with other RAT system such as LTE.

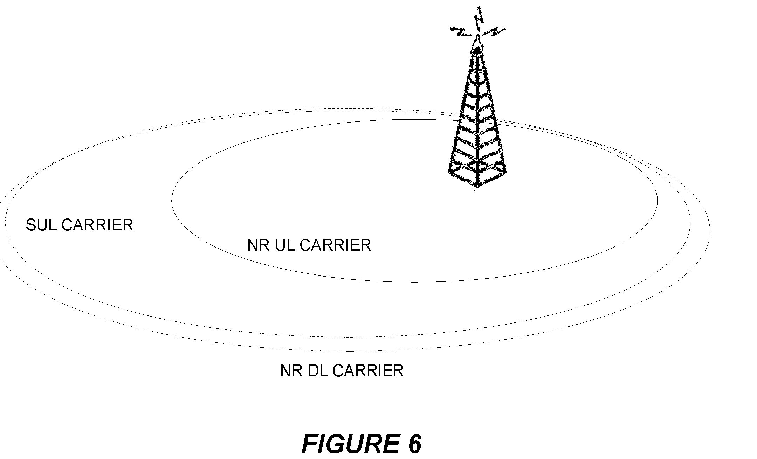

Figure 6 shows the coverages of the NR UL carrier and the SUL carrier in a NR cell, i.e., an NR frequency combination of paired carrier and SUL (for UL only). Since there are two uplink carriers for a NR cell in this case, the random access can be initiated in either NR UL carrier or SUL carrier. A UE can heretofore select which carrier for random access based on a threshold. If the UE determine it is close to the gNB based on the threshold, a UE heretofore shall select the NR UL carrier for random access due to the radio condition being good enough to finish the random access procedure over NR UL carrier. Otherwise, the UE shall heretofore select SUL carrier to finish the random access procedure. In such way, the random access load can be offloaded between two UL carriers in a NR cell.

In NR-U, as defined in Scenario D, it is feasible to deploy SUL carrier to provide additional FDM resources for the UE so that it is beneficial to minimize the negative impact of LBT failures on UL transmissions.

Consider now SUL in NR-U. The support of SUL carrier for NR-U should be designed on top of NR licensed SUL framework in Rel-15. In NR licensed, switching between the NUL carrier and the SUL carrier means that the UL transmissions move from one carrier to the other carrier, which is done by:
- an indication in DCI;
- the Random Access procedure.
For the former option, a carrier switch decision made by the gNB for a UE to switch UL transmissions to the NUL carrier (i.e., unlicensed carrier) may be not suitable, since the gNB may not have timely knowledge of channel occupancy or LBT statistics of the NUL carrier of the UE. In one example, after receiving a switch decision to the NUL carrier, it may occur that subsequent UL transmissions on the NUL carrier may be blocked by the LBT failures. It would be better for the UE to perform UL transmissions on the SUL carrier instead of the NUL carrier.

Regarding UL LBT failure handling, a mechanism in MAC 3GPP specifications should handle the UL LBT failure, where "consistent" UL LBT failures (at least for UL transmissions of a scheduling request, SR, random access channel, RACH, physical uplink shared channel, PUSCH) are used for problem detection. This mechanism may be applied for assisting carrier switch in this case.
A UE can measure LBT failures periodically on the NUL carrier. The UE may also rely on or combine received measurement results of channel occupancy (CO) or LBT failures on the NUL carrier from the gNB, which is signaled by the gNB. The measurements may be performed per subband and per BWP, if the NUL carrier is configured with a wideband BWP, which comprises multiple LBT subbands.
When a UE has experienced consistent UL LBT failures, an event is triggered. The UE may take different actions depending on whether the event triggered on the NUL carrier is per subband, or per BWP, or per carrier. The UE may choose to use other subbands for UL transmissions on the NUL carrier if there are consistent UL LBT failures on one serving subband. Or, the UE may switch to other BWP, if there are consistent UL LBT failures in its active BWP, meaning that all subbands are congested. Or, the UE may choose to switch to the SUL carrier for UL transmissions if there are consistent UL LBT failures in its active BWP, and there is no other BWPs configured for the UE in the cell.

The UE may further report the failure reason to the gNB. The failure report can be sent via the SUL carrier. Therefore, according to some embodiments, in an NR-U cell configured with SUL carrier in a licensed band, the UE monitors "consistent" UL LBT failures (at least for UL transmissions of SR, RACH, PUSCH) on the NUL carrier. In some embodiments, a UE can declare a UL LBT problem upon detection of "consistent" UL LBT failures on the NUL carrier. In some embodiments, in an NR-U cell configured with SUL carrier in licensed band, the UE reports the failure reason to the gNB via the SUL carrier. In some embodiments, in an NR-U cell configured with SUL carrier in a licensed band, the UE switches to the SUL carrier for UL transmissions upon detection of "consistent" UL LBT on the NUL carrier. If the UE can declare a LBT problem concerning "consistent DL LBT failures", the similar conclusion is also applicable to Scenario D.

In addition, an RSRP threshold rsrp-ThresholdSSB-SUL for the selection between the NUL carrier and the SUL carrier may be employed as specified in the Medium Access Control (MAC) 3GPP specification TS 38.321:
1> if the Serving Cell for the Random Access procedure is configured with supplementaryUplink; and
1> if the RSRP of the downlink pathloss reference is less than rsrp-ThresholdSSB-SUL:
   2> select the SUL carrier for performing Random Access procedure;
   2> set the PCMAX to P_{CMAX,f,c} of the SUL carrier.
1> else:
   2> select the NUL carrier for performing Random Access procedure;
   2> set the PCMAX to P_{CMAX,f,c} of the NUL carrier.
A UE heretofore selects a carrier for a random access (RA) purely based on measured DL RSRP, not considering channel occupancy or LBT failure statistics of the NUL carrier. This may lead to a wrong switch decision to the NUL carrier for a RA, such that the RA may be blocked by LBT failures on the NUL carrier. Accordingly, purely based on the measured DL RSRP, the UE may select a carrier which is not suitable for a RA.

It is beneficial for the UE to select a carrier for RA considering measured LBT failure statistics or CO on the NUL carrier. For the initial system access, the UE may not be able to measure CO or monitor LBT failures on the NUL carrier. In this case, the gNB may provide measurement results to the UE. Therefore, according to some embodiments, in an NR-U cell configured with SUL carrier in licensed band, the UE selects a carrier (either the SUL or the NUL) for a RA considering measured LBT failures or CO on the NUL carrier.

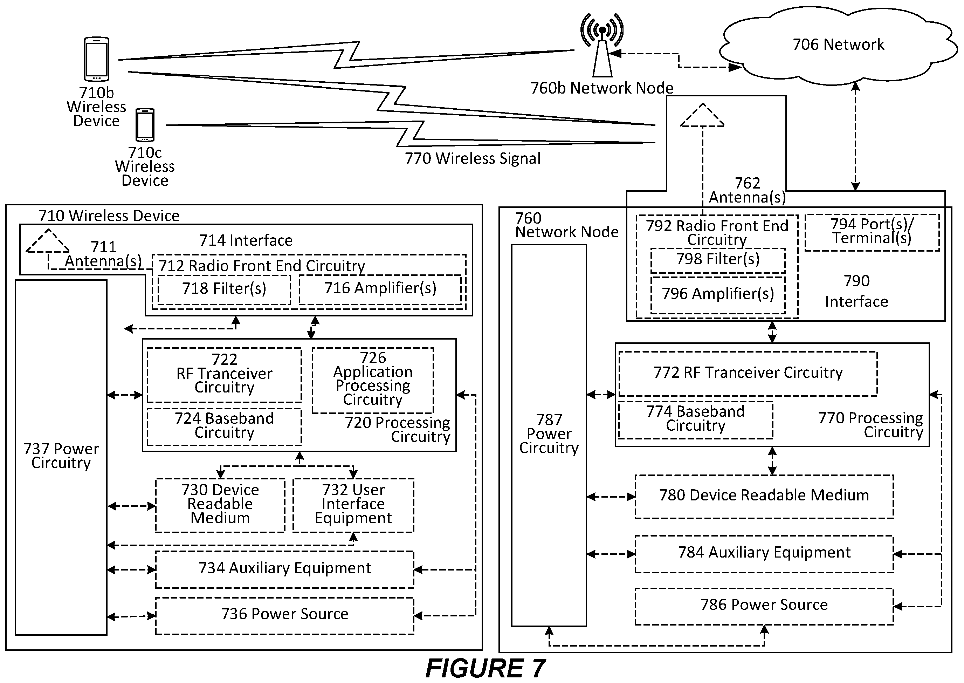

Although the subject matter described herein may be implemented in any appropriate type of system using any suitable components, the embodiments disclosed herein are described in relation to a wireless network, such as the example wireless network illustrated in Figure 7. For simplicity, the wireless network of Figure 7 only depicts network 706, network nodes 760 and 760b, and WDs 710, 710b, and 710c. In practice, a wireless network may further include any additional elements suitable to support communication between wireless devices or between a wireless device and another communication device, such as a landline telephone, a service provider, or any other network node or end device. Of the illustrated components, network node 760 and wireless device (WD) 710 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 706 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 760 and WD 710 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 7, network node 760 includes processing circuitry 770, device readable medium 780, interface 790, auxiliary equipment 784, power source 786, power circuitry 787, and antenna 762. Although network node 760 illustrated in the example wireless network of Figure 7 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 760 are depicted as single boxes located within a larger box, or nested within multiple boxes, in practice, a network node may comprise multiple different physical components that make up a single illustrated component (e.g., device readable medium 780 may comprise multiple separate hard drives as well as multiple RAM modules).

Similarly, network node 760 may be composed of multiple physically separate components (e.g., a NodeB component and a RNC component, or a BTS component and a BSC component, etc.), which may each have their own respective components. In certain scenarios in which network node 760 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 760 may be configured to support multiple radio access technologies (RATs). In such embodiments, some components may be duplicated (e.g., separate device readable medium 780 for the different RATs) and some components may be reused (e.g., the same antenna 762 may be shared by the RATs). Network node 760 may also include multiple sets of the various illustrated components for different wireless technologies integrated into network node 760, such as, for example, GSM, WCDMA, LTE, NR, WiFi, or Bluetooth wireless technologies. These wireless technologies may be integrated into the same or different chip or set of chips and other components within network node 760.

Processing circuitry 770 is configured to perform any determining, calculating, or similar operations (e.g., certain obtaining operations) described herein as being provided by a network node. These operations performed by processing circuitry 770 may include processing information obtained by processing circuitry 770 by, for example, converting the obtained information into other information, comparing the obtained information or converted information to information stored in the network node, and/or performing one or more operations based on the obtained information or converted information, and as a result of said processing making a determination.

Processing circuitry 770 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 760 components, such as device readable medium 780, network node 760 functionality. For example, processing circuitry 770 may execute instructions stored in device readable medium 780 or in memory within processing circuitry 770. Such functionality may include providing any of the various wireless features, functions, or benefits discussed herein. In some embodiments, processing circuitry 770 may include a system on a chip (SOC).

In some embodiments, processing circuitry 770 may include one or more of radio frequency (RF) transceiver circuitry 772 and baseband processing circuitry 774. In some embodiments, radio frequency (RF) transceiver circuitry 772 and baseband processing circuitry 774 may be on separate chips (or sets of chips), boards, or units, such as radio units and digital units. In alternative embodiments, part or all of RF transceiver circuitry 772 and baseband processing circuitry 774 may be on the same chip or set of chips, boards, or units

In certain embodiments, some or all of the functionality described herein as being provided by a network node, base station, eNB or other such network device may be performed by processing circuitry 770 executing instructions stored on device readable medium 780 or memory within processing circuitry 770. In alternative embodiments, some or all of the functionality may be provided by processing circuitry 770 without executing instructions stored on a separate or discrete device readable medium, such as in a hard-wired manner. In any of those embodiments, whether executing instructions stored on a device readable storage medium or not, processing circuitry 770 can be configured to perform the described functionality. The benefits provided by such functionality are not limited to processing circuitry 770 alone or to other components of network node 760, but are enjoyed by network node 760 as a whole, and/or by end users and the wireless network generally.

Device readable medium 780 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 770. Device readable medium 780 may store any suitable instructions, data or information, including a computer program, software, an application including one or more of logic, rules, code, tables, etc. and/or other instructions capable of being executed by processing circuitry 770 and, utilized by network node 760. Device readable medium 780 may be used to store any calculations made by processing circuitry 770 and/or any data received via interface 790. In some embodiments, processing circuitry 770 and device readable medium 780 may be considered to be integrated.

Interface 790 is used in the wired or wireless communication of signalling and/or data between network node 760, network 706, and/or WDs 710. As illustrated, interface 790 comprises port(s)/terminal(s) 794 to send and receive data, for example to and from network 706 over a wired connection. Interface 790 also includes radio front end circuitry 792 that may be coupled to, or in certain embodiments a part of, antenna 762. Radio front end circuitry 792 comprises filters 798 and amplifiers 796. Radio front end circuitry 792 may be connected to antenna 762 and processing circuitry 770. Radio front end circuitry may be configured to condition signals communicated between antenna 762 and processing circuitry 770. Radio front end circuitry 792 may receive digital data that is to be sent out to other network nodes or WDs via a wireless connection. Radio front end circuitry 792 may convert the digital data into a radio signal having the appropriate channel and bandwidth parameters using a combination of filters 798 and/or amplifiers 796. The radio signal may then be transmitted via antenna 762. Similarly, when receiving data, antenna 762 may collect radio signals which are then converted into digital data by radio front end circuitry 792. The digital data may be passed to processing circuitry 770. In other embodiments, the interface may comprise different components and/or different combinations of components.

In certain alternative embodiments, network node 760 may not include separate radio front end circuitry 792, instead, processing circuitry 770 may comprise radio front end circuitry and may be connected to antenna 762 without separate radio front end circuitry 792. Similarly, in some embodiments, all or some of RF transceiver circuitry 772 may be considered a part of interface 790. In still other embodiments, interface 790 may include one or more ports or terminals 794, radio front end circuitry 792, and RF transceiver circuitry 772, as part of a radio unit (not shown), and interface 790 may communicate with baseband processing circuitry 774, which is part of a digital unit (not shown).

Antenna 762 may include one or more antennas, or antenna arrays, configured to send and/or receive wireless signals. Antenna 762 may be coupled to radio front end circuitry 790 and may be any type of antenna capable of transmitting and receiving data and/or signals wirelessly. In some embodiments, antenna 762 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 762 may be separate from network node 760 and may be connectable to network node 760 through an interface or port.

Antenna 762, interface 790, and/or processing circuitry 770 may be configured to perform any receiving operations and/or certain obtaining operations described herein as being performed by a network node. Any information, data and/or signals may be received from a wireless device, another network node and/or any other network equipment. Similarly, antenna 762, interface 790, and/or processing circuitry 770 may be configured to perform any transmitting operations described herein as being performed by a network node. Any information, data and/or signals may be transmitted to a wireless device, another network node and/or any other network equipment.

Power circuitry 787 may comprise, or be coupled to, power management circuitry and is configured to supply the components of network node 760 with power for performing the functionality described herein. Power circuitry 787 may receive power from power source 786. Power source 786 and/or power circuitry 787 may be configured to provide power to the various components of network node 760 in a form suitable for the respective components (e.g., at a voltage and current level needed for each respective component). Power source 786 may either be included in, or external to, power circuitry 787 and/or network node 760. For example, network node 760 may be connectable to an external power source (e.g., an electricity outlet) via an input circuitry or interface such as an electrical cable, whereby the external power source supplies power to power circuitry 787. As a further example, power source 786 may comprise a source of power in the form of a battery or battery pack which is connected to, or integrated in, power circuitry 787. The battery may provide backup power should the external power source fail. Other types of power sources, such as photovoltaic devices, may also be used.

Alternative embodiments of network node 760 may include additional components beyond those shown in Figure 7 that may be responsible for providing certain aspects of the network node's functionality, including any of the functionality described herein and/or any functionality necessary to support the subject matter described herein. For example, network node 760 may include user interface equipment to allow input of information into network node 760 and to allow output of information from network node 760. This may allow a user to perform diagnostic, maintenance, repair, and other administrative functions for network node 760.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 710 includes antenna 711, interface 714, processing circuitry 720, device readable medium 730, user interface equipment 732, auxiliary equipment 734, power source 736 and power circuitry 737. WD 710 may include multiple sets of one or more of the illustrated components for different wireless technologies supported by WD 710, such as, for example, GSM, WCDMA, LTE, NR, WiFi, WiMAX, NB-IoT, or Bluetooth wireless technologies, just to mention a few. These wireless technologies may be integrated into the same or different chips or set of chips as other components within WD 710.

Antenna 711 may include one or more antennas or antenna arrays, configured to send and/or receive wireless signals, and is connected to interface 714. In certain alternative embodiments, antenna 711 may be separate from WD 710 and be connectable to WD 710 through an interface or port. Antenna 711, interface 714, and/or processing circuitry 720 may be configured to perform any receiving or transmitting operations described herein as being performed by a WD. Any information, data and/or signals may be received from a network node and/or another WD. In some embodiments, radio front end circuitry and/or antenna 711 may be considered an interface.

As illustrated, interface 714 comprises radio front end circuitry 712 and antenna 711. Radio front end circuitry 712 comprise one or more filters 718 and amplifiers 716. Radio front end circuitry 714 is connected to antenna 711 and processing circuitry 720, and is configured to condition signals communicated between antenna 711 and processing circuitry 720. Radio front end circuitry 712 may be coupled to or a part of antenna 711. In some embodiments, WD 710 may not include separate radio front end circuitry 712; rather, processing circuitry 720 may comprise radio front end circuitry and may be connected to antenna 711. Similarly, in some embodiments, some or all of RF transceiver circuitry 722 may be considered a part of interface 714. Radio front end circuitry 712 may receive digital data that is to be sent out to other network nodes or WDs via a wireless connection. Radio front end circuitry 712 may convert the digital data into a radio signal having the appropriate channel and bandwidth parameters using a combination of filters 718 and/or amplifiers 716. The radio signal may then be transmitted via antenna 711. Similarly, when receiving data, antenna 711 may collect radio signals which are then converted into digital data by radio front end circuitry 712. The digital data may be passed to processing circuitry 720. In other embodiments, the interface may comprise different components and/or different combinations of components.

Processing circuitry 720 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 710 components, such as device readable medium 730, WD 710 functionality. Such functionality may include providing any of the various wireless features or benefits discussed herein. For example, processing circuitry 720 may execute instructions stored in device readable medium 730 or in memory within processing circuitry 720 to provide the functionality disclosed herein.

As illustrated, processing circuitry 720 includes one or more of RF transceiver circuitry 722, baseband processing circuitry 724, and application processing circuitry 726. In other embodiments, the processing circuitry may comprise different components and/or different combinations of components. In certain embodiments processing circuitry 720 of WD 710 may comprise a SOC. In some embodiments, RF transceiver circuitry 722, baseband processing circuitry 724, and application processing circuitry 726 may be on separate chips or sets of chips. In alternative embodiments, part or all of baseband processing circuitry 724 and application processing circuitry 726 may be combined into one chip or set of chips, and RF transceiver circuitry 722 may be on a separate chip or set of chips. In still alternative embodiments, part or all of RF transceiver circuitry 722 and baseband processing circuitry 724 may be on the same chip or set of chips, and application processing circuitry 726 may be on a separate chip or set of chips. In yet other alternative embodiments, part or all of RF transceiver circuitry 722, baseband processing circuitry 724, and application processing circuitry 726 may be combined in the same chip or set of chips. In some embodiments, RF transceiver circuitry 722 may be a part of interface 714. RF transceiver circuitry 722 may condition RF signals for processing circuitry 720.

In certain embodiments, some or all of the functionality described herein as being performed by a WD may be provided by processing circuitry 720 executing instructions stored on device readable medium 730, which in certain embodiments may be a computer-readable storage medium. In alternative embodiments, some or all of the functionality may be provided by processing circuitry 720 without executing instructions stored on a separate or discrete device readable storage medium, such as in a hard-wired manner. In any of those particular embodiments, whether executing instructions stored on a device readable storage medium or not, processing circuitry 720 can be configured to perform the described functionality. The benefits provided by such functionality are not limited to processing circuitry 720 alone or to other components of WD 710, but are enjoyed by WD 710 as a whole, and/or by end users and the wireless network generally.

Processing circuitry 720 may be configured to perform any determining, calculating, or similar operations (e.g., certain obtaining operations) described herein as being performed by a WD. These operations, as performed by processing circuitry 720, may include processing information obtained by processing circuitry 720 by, for example, converting the obtained information into other information, comparing the obtained information or converted information to information stored by WD 710, and/or performing one or more operations based on the obtained information or converted information, and as a result of said processing making a determination.

Device readable medium 730 may be operable to store a computer program, software, an application including one or more of logic, rules, code, tables, etc. and/or other instructions capable of being executed by processing circuitry 720. Device readable medium 730 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 720. In some embodiments, processing circuitry 720 and device readable medium 730 may be considered to be integrated.

User interface equipment 732 may provide components that allow for a human user to interact with WD 710. Such interaction may be of many forms, such as visual, audial, tactile, etc. User interface equipment 732 may be operable to produce output to the user and to allow the user to provide input to WD 710. The type of interaction may vary depending on the type of user interface equipment 732 installed in WD 710. For example, if WD 710 is a smart phone, the interaction may be via a touch screen; if WD 710 is a smart meter, the interaction may be through a screen that provides usage (e.g., the number of gallons used) or a speaker that provides an audible alert (e.g., if smoke is detected). User interface equipment 732 may include input interfaces, devices and circuits, and output interfaces, devices and circuits. User interface equipment 732 is configured to allow input of information into WD 710, and is connected to processing circuitry 720 to allow processing circuitry 720 to process the input information. User interface equipment 732 may include, for example, a microphone, a proximity or other sensor, keys/buttons, a touch display, one or more cameras, a USB port, or other input circuitry. User interface equipment 732 is also configured to allow output of information from WD 710, and to allow processing circuitry 720 to output information from WD 710. User interface equipment 732 may include, for example, a speaker, a display, vibrating circuitry, a USB port, a headphone interface, or other output circuitry. Using one or more input and output interfaces, devices, and circuits, of user interface equipment 732, WD 710 may communicate with end users and/or the wireless network, and allow them to benefit from the functionality described herein.

Auxiliary equipment 734 is operable to provide more specific functionality which may not be generally performed by WDs. This may comprise specialized sensors for doing measurements for various purposes, interfaces for additional types of communication such as wired communications etc. The inclusion and type of components of auxiliary equipment 734 may vary depending on the embodiment and/or scenario.

Power source 736 may, in some embodiments, be in the form of a battery or battery pack. Other types of power sources, such as an external power source (e.g., an electricity outlet), photovoltaic devices or power cells, may also be used. WD 710 may further comprise power circuitry 737 for delivering power from power source 736 to the various parts of WD 710 which need power from power source 736 to carry out any functionality described or indicated herein. Power circuitry 737 may in certain embodiments comprise power management circuitry. Power circuitry 737 may additionally or alternatively be operable to receive power from an external power source; in which case WD 710 may be connectable to the external power source (such as an electricity outlet) via input circuitry or an interface such as an electrical power cable. Power circuitry 737 may also in certain embodiments be operable to deliver power from an external power source to power source 736. This may be, for example, for the charging of power source 736. Power circuitry 737 may perform any formatting, converting, or other modification to the power from power source 736 to make the power suitable for the respective components of WD 710 to which power is supplied.

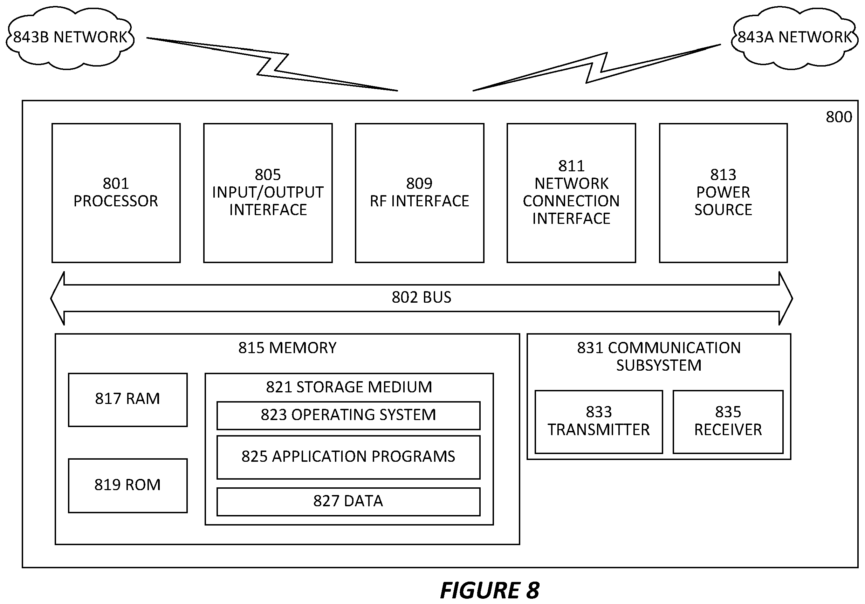

Figure 8 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 8200 may be any UE identified by the 3^{rd} Generation Partnership Project (3GPP), including a NB-loT UE, a machine type communication (MTC) UE, and/or an enhanced MTC (eMTC) UE. UE 800, as illustrated in Figure 8, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 8 is a UE, the components discussed herein are equally applicable to a WD, and vice-versa.

In Figure 8, UE 800 includes processing circuitry 801 that is operatively coupled to input/output interface 805, radio frequency (RF) interface 809, network connection interface 811, memory 815 including random access memory (RAM) 817, read-only memory (ROM) 819, and storage medium 821 or the like, communication subsystem 831, power source 833, and/or any other component, or any combination thereof. Storage medium 821 includes operating system 823, application program 825, and data 827. In other embodiments, storage medium 821 may include other similar types of information. Certain UEs may utilize all of the components shown in Figure 8, or only a subset of the components. The level of integration between the components may vary from one UE to another UE. Further, certain UEs may contain multiple instances of a component, such as multiple processors, memories, transceivers, transmitters, receivers, etc.

In Figure 8, processing circuitry 801 may be configured to process computer instructions and data. Processing circuitry 801 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 801 may include two central processing units (CPUs). Data may be information in a form suitable for use by a computer.

In the depicted embodiment, input/output interface 805 may be configured to provide a communication interface to an input device, output device, or input and output device. UE 800 may be configured to use an output device via input/output interface 805. An output device may use the same type of interface port as an input device. For example, a USB port may be used to provide input to and output from UE 800. The output device may be a speaker, a sound card, a video card, a display, a monitor, a printer, an actuator, an emitter, a smartcard, another output device, or any combination thereof. UE 800 may be configured to use an input device via input/output interface 805 to allow a user to capture information into UE 800. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 8, RF interface 809 may be configured to provide a communication interface to RF components such as a transmitter, a receiver, and an antenna. Network connection interface 811 may be configured to provide a communication interface to network 843a. Network 843a may encompass wired and/or wireless networks such as a local-area network (LAN), a wide-area network (WAN), a computer network, a wireless network, a telecommunications network, another like network or any combination thereof. For example, network 843a may comprise a Wi-Fi network. Network connection interface 811 may be configured to include a receiver and a transmitter interface used to communicate with one or more other devices over a communication network according to one or more communication protocols, such as Ethernet, TCP/IP, SONET, ATM, or the like. Network connection interface 811 may implement receiver and transmitter functionality appropriate to the communication network links (e.g., optical, electrical, and the like). The transmitter and receiver functions may share circuit components, software or firmware, or alternatively may be implemented separately.

RAM 817 may be configured to interface via bus 802 to processing circuitry 801 to provide storage or caching of data or computer instructions during the execution of software programs such as the operating system, application programs, and device drivers. ROM 819 may be configured to provide computer instructions or data to processing circuitry 801. For example, ROM 819 may be configured to store invariant low-level system code or data for basic system functions such as basic input and output (I/O), startup, or reception of keystrokes from a keyboard that are stored in a non-volatile memory. Storage medium 821 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 821 may be configured to include operating system 823, application program 825 such as a web browser application, a widget or gadget engine or another application, and data file 827. Storage medium 821 may store, for use by UE 800, any of a variety of various operating systems or combinations of operating systems.

Storage medium 821 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 821 may allow UE 800 to access computer-executable instructions, application programs or the like, stored on transitory or non-transitory memory media, to off-load data, or to upload data. An article of manufacture, such as one utilizing a communication system may be tangibly embodied in storage medium 821, which may comprise a device readable medium.

In Figure 8, processing circuitry 801 may be configured to communicate with network 843b using communication subsystem 831. Network 843a and network 843b may be the same network or networks or different network or networks. Communication subsystem 831 may be configured to include one or more transceivers used to communicate with network 843b. For example, communication subsystem 831 may be configured to include one or more transceivers used to communicate with one or more remote transceivers of another device capable of wireless communication such as another WD, UE, or base station of a radio access network (RAN) according to one or more communication protocols, such as IEEE 802.8, CDMA, WCDMA, GSM, LTE, UTRAN, WiMax, or the like. Each transceiver may include transmitter 833 and/or receiver 835 to implement transmitter or receiver functionality, respectively, appropriate to the RAN links (e.g., frequency allocations and the like). Further, transmitter 833 and receiver 835 of each transceiver may share circuit components, software or firmware, or alternatively may be implemented separately.

In the illustrated embodiment, the communication functions of communication subsystem 831 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 831 may include cellular communication, Wi-Fi communication, Bluetooth communication, and GPS communication. Network 843b may encompass wired and/or wireless networks such as a local-area network (LAN), a wide-area network (WAN), a computer network, a wireless network, a telecommunications network, another like network or any combination thereof. For example, network 843b may be a cellular network, a Wi-Fi network, and/or a near-field network. Power source 813 may be configured to provide alternating current (AC) or direct current (DC) power to components of UE 800.

The features, benefits and/or functions described herein may be implemented in one of the components of UE 800 or partitioned across multiple components of UE 800. Further, the features, benefits, and/or functions described herein may be implemented in any combination of hardware, software or firmware. In one example, communication subsystem 831 may be configured to include any of the components described herein. Further, processing circuitry 801 may be configured to communicate with any of such components over bus 802. In another example, any of such components may be represented by program instructions stored in memory that when executed by processing circuitry 801 perform the corresponding functions described herein. In another example, the functionality of any of such components may be partitioned between processing circuitry 801 and communication subsystem 831. In another example, the non-computationally intensive functions of any of such components may be implemented in software or firmware and the computationally intensive functions may be implemented in hardware.

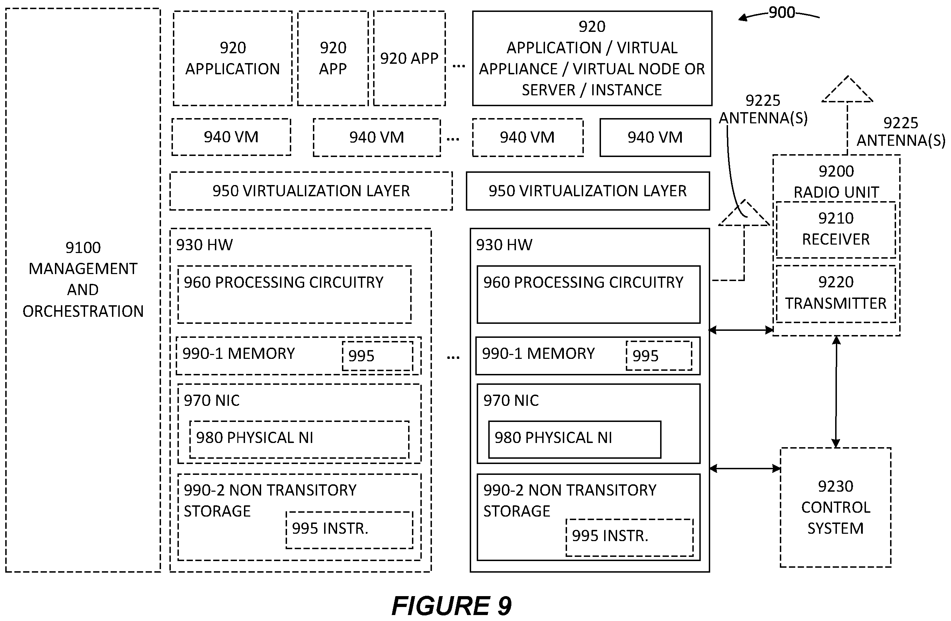

Figure 9 is a schematic block diagram illustrating a virtualization environment 900 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 900 hosted by one or more of hardware nodes 930. Further, in embodiments in which the virtual node is not a radio access node or does not require radio connectivity (e.g., a core network node), then the network node may be entirely virtualized.

The functions may be implemented by one or more applications 920 (which may alternatively be called software instances, virtual appliances, network functions, virtual nodes, virtual network functions, etc.) operative to implement some of the features, functions, and/or benefits of some of the embodiments disclosed herein. Applications 920 are run in virtualization environment 900 which provides hardware 930 comprising processing circuitry 960 and memory 990. Memory 990 contains instructions 995 executable by processing circuitry 960 whereby application 920 is operative to provide one or more of the features, benefits, and/or functions disclosed herein.

Virtualization environment 900, comprises general-purpose or special-purpose network hardware devices 930 comprising a set of one or more processors or processing circuitry 960, which may be commercial off-the-shelf (COTS) processors, dedicated Application Specific Integrated Circuits (ASICs), or any other type of processing circuitry including digital or analog hardware components or special purpose processors. Each hardware device may comprise memory 990-1 which may be non-persistent memory for temporarily storing instructions 995 or software executed by processing circuitry 960. Each hardware device may comprise one or more network interface controllers (NICs) 970, also known as network interface cards, which include physical network interface 980. Each hardware device may also include non-transitory, persistent, machine-readable storage media 990-2 having stored therein software 995 and/or instructions executable by processing circuitry 960. Software 995 may include any type of software including software for instantiating one or more virtualization layers 950 (also referred to as hypervisors), software to execute virtual machines 940 as well as software allowing it to execute functions, features and/or benefits described in relation with some embodiments described herein.

Virtual machines 940, comprise virtual processing, virtual memory, virtual networking or interface and virtual storage, and may be run by a corresponding virtualization layer 950 or hypervisor. Different embodiments of the instance of virtual appliance 920 may be implemented on one or more of virtual machines 940, and the implementations may be made in different ways.

During operation, processing circuitry 960 executes software 995 to instantiate the hypervisor or virtualization layer 950, which may sometimes be referred to as a virtual machine monitor (VMM). Virtualization layer 950 may present a virtual operating platform that appears like networking hardware to virtual machine 940.

As shown in Figure 9, hardware 930 may be a standalone network node with generic or specific components. Hardware 930 may comprise antenna 9225 and may implement some functions via virtualization. Alternatively, hardware 930 may be part of a larger cluster of hardware (e.g. such as in a data center or customer premise equipment (CPE)) where many hardware nodes work together and are managed via management and orchestration (MANO) 9100, which, among others, oversees lifecycle management of applications 920.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 940 may be a software implementation of a physical machine that runs programs as if they were executing on a physical, non-virtualized machine. Each of virtual machines 940, and that part of hardware 930 that executes that virtual machine, be it hardware dedicated to that virtual machine and/or hardware shared by that virtual machine with others of the virtual machines 940, forms a separate virtual network elements (VNE).

Still in the context of NFV, Virtual Network Function (VNF) is responsible for handling specific network functions that run in one or more virtual machines 940 on top of hardware networking infrastructure 930 and corresponds to application 920 in Figure 9.

In some embodiments, one or more radio units 9200 that each include one or more transmitters 9220 and one or more receivers 9210 may be coupled to one or more antennas 9225. Radio units 9200 may communicate directly with hardware nodes 930 via one or more appropriate network interfaces and may be used in combination with the virtual components to provide a virtual node with radio capabilities, such as a radio access node or a base station.

In some embodiments, some signalling can be effected with the use of control system 9230 which may alternatively be used for communication between the hardware nodes 930 and radio units 9200.

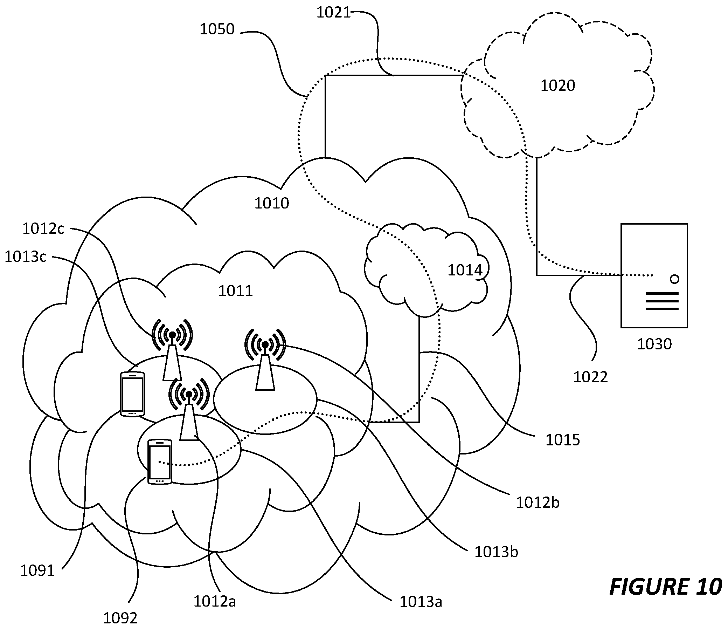

Figure 10 illustrates a telecommunication network connected via an intermediate network to a host computer in accordance with some embodiments. In particular, with reference to FIGURE 10, in accordance with an embodiment, a communication system includes telecommunication network 1010, such as a 3GPP-type cellular network, which comprises access network 1011, such as a radio access network, and core network 1014. Access network 1011 comprises a plurality of base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to core network 1014 over a wired or wireless connection 1015. A first UE 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Telecommunication network 1010 is itself connected to host computer 1030, which may be embodied in the hardware and/or software of a standalone server, a cloud-implemented server, a distributed server or as processing resources in a server farm. Host computer 1030 may be under the ownership or control of a service provider, or may be operated by the service provider or on behalf of the service provider. Connections 1021 and 1022 between telecommunication network 1010 and host computer 1030 may extend directly from core network 1014 to host computer 1030 or may go via an optional intermediate network 1020. Intermediate network 1020 may be one of, or a combination of more than one of, a public, private or hosted network; intermediate network 1020, if any, may be a backbone network or the Internet; in particular, intermediate network 1020 may comprise two or more sub-networks (not shown).

The communication system of Figure 10 as a whole enables connectivity between the connected UEs 1091, 1092 and host computer 1030. The connectivity may be described as an over-the-top (OTT) connection 1050. Host computer 1030 and the connected UEs 1091, 1092 are configured to communicate data and/or signaling via OTT connection 1050, using access network 1011, core network 1014, any intermediate network 1020 and possible further infrastructure (not shown) as intermediaries. OTT connection 1050 may be transparent in the sense that the participating communication devices through which OTT connection 1050 passes are unaware of routing of uplink and downlink communications. For example, base station 1012 may not or need not be informed about the past routing of an incoming downlink communication with data originating from host computer 1030 to be forwarded (e.g., handed over) to a connected UE 1091. Similarly, base station 1012 need not be aware of the future routing of an outgoing uplink communication originating from the UE 1091 towards the host computer 1030.

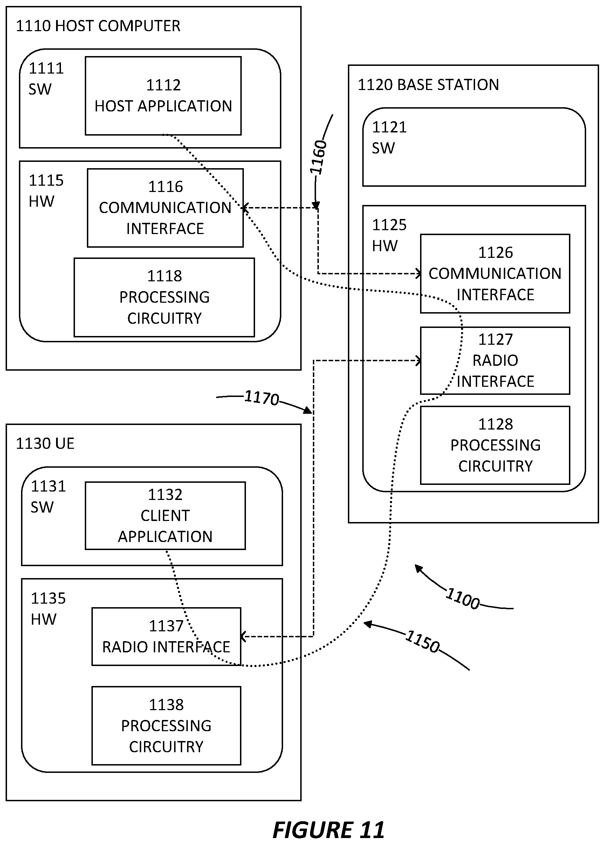

Example implementations, in accordance with an embodiment, of the UE, base station and host computer discussed in the preceding paragraphs will now be described with reference to Figure 11. Figure 11 illustrates host computer communicating via a base station with a user equipment over a partially wireless connection in accordance with some embodiments In communication system 1100, host computer 1110 comprises hardware 1115 including communication interface 1116 configured to set up and maintain a wired or wireless connection with an interface of a different communication device of communication system 1100. Host computer 1110 further comprises processing circuitry 1118, which may have storage and/or processing capabilities. In particular, processing circuitry 1118 may comprise one or more programmable processors, application-specific integrated circuits, field programmable gate arrays or combinations of these (not shown) adapted to execute instructions. Host computer 1110 further comprises software 1111, which is stored in or accessible by host computer 1110 and executable by processing circuitry 1118. Software 1111 includes host application 1112. Host application 1112 may be operable to provide a service to a remote user, such as UE 1130 connecting via OTT connection 1150 terminating at UE 1130 and host computer 1110. In providing the service to the remote user, host application 1112 may provide user data which is transmitted using OTT connection 1150.

Communication system 1100 further includes base station 1120 provided in a telecommunication system and comprising hardware 1125 enabling it to communicate with host computer 1110 and with UE 1130. Hardware 1125 may include communication interface 1126 for setting up and maintaining a wired or wireless connection with an interface of a different communication device of communication system 1100, as well as radio interface 1127 for setting up and maintaining at least wireless connection 1170 with UE 1130 located in a coverage area (not shown in Figure 11) served by base station 1120. Communication interface 1126 may be configured to facilitate connection 1160 to host computer 1110. Connection 1160 may be direct or it may pass through a core network (not shown in Figure 11) of the telecommunication system and/or through one or more intermediate networks outside the telecommunication system. In the embodiment shown, hardware 1125 of base station 1120 further includes processing circuitry 1128, which may comprise one or more programmable processors, application-specific integrated circuits, field programmable gate arrays or combinations of these (not shown) adapted to execute instructions. Base station 1120 further has software 1121 stored internally or accessible via an external connection.

Communication system 1100 further includes UE 1130 already referred to. Its hardware 1135 may include radio interface 1137 configured to set up and maintain wireless connection 1170 with a base station serving a coverage area in which UE 1130 is currently located. Hardware 1135 of UE 1130 further includes processing circuitry 1138, which may comprise one or more programmable processors, application-specific integrated circuits, field programmable gate arrays or combinations of these (not shown) adapted to execute instructions. UE 1130 further comprises software 1131, which is stored in or accessible by UE 1130 and executable by processing circuitry 1138. Software 1131 includes client application 1132. Client application 1132 may be operable to provide a service to a human or non-human user via UE 1130, with the support of host computer 1110. In host computer 1110, an executing host application 1112 may communicate with the executing client application 1132 via OTT connection 1150 terminating at UE 1130 and host computer 1110. In providing the service to the user, client application 1132 may receive request data from host application 1112 and provide user data in response to the request data. OTT connection 1150 may transfer both the request data and the user data. Client application 1132 may interact with the user to generate the user data that it provides.

It is noted that host computer 1110, base station 1120 and UE 1130 illustrated in Figure 11 may be similar or identical to host computer 1030, one of base stations 1012a, 1012b, 1012c and one of UEs 1091, 1092 of Figure 10, respectively. This is to say, the inner workings of these entities may be as shown in Figure 11 and independently, the surrounding network topology may be that of Figure 10.

In Figure 11, OTT connection 1150 has been drawn abstractly to illustrate the communication between host computer 1110 and UE 1130 via base station 1120, without explicit reference to any intermediary devices and the precise routing of messages via these devices. Network infrastructure may determine the routing, which it may be configured to hide from UE 1130 or from the service provider operating host computer 1110, or both. While OTT connection 1150 is active, the network infrastructure may further take decisions by which it dynamically changes the routing (e.g., on the basis of load balancing consideration or reconfiguration of the network).

Wireless connection 1170 between UE 1130 and base station 1120 is in accordance with the teachings of the embodiments described throughout this disclosure. One or more of the various embodiments improve the performance of OTT services provided to UE 1130 using OTT connection 1150, in which wireless connection 1170 forms the last segment.

A measurement procedure may be provided for the purpose of monitoring data rate, latency and other factors on which the one or more embodiments improve. There may further be an optional network functionality for reconfiguring OTT connection 1150 between host computer 1110 and UE 1130, in response to variations in the measurement results. The measurement procedure and/or the network functionality for reconfiguring OTT connection 1150 may be implemented in software 1111 and hardware 1115 of host computer 1110 or in software 1131 and hardware 1135 of UE 1130, or both. In embodiments, sensors (not shown) may be deployed in or in association with communication devices through which OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of OTT connection 1150 may include message format, retransmission settings, preferred routing etc.; the reconfiguring need not affect base station 1120, and it may be unknown or imperceptible to base station 1120. Such procedures and functionalities may be known and practiced in the art. In certain embodiments, measurements may involve proprietary UE signaling facilitating host computer 1110's measurements of throughput, propagation times, latency and the like. The measurements may be implemented in that software 1111 and 1131 causes messages to be transmitted, in particular empty or 'dummy' messages, using OTT connection 1150 while it monitors propagation times, errors etc.

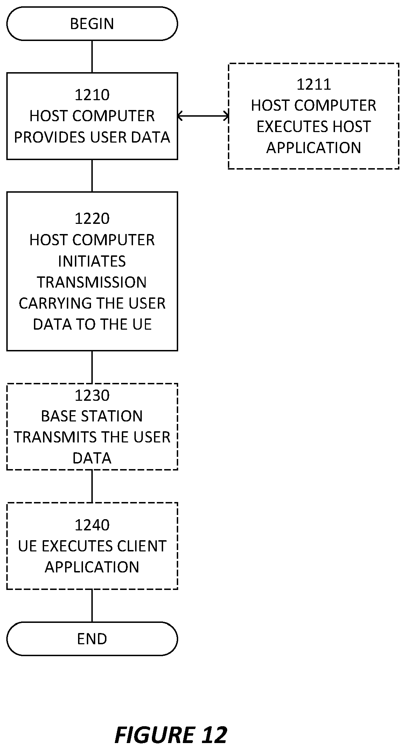

Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step 1210, the host computer provides user data. In substep 1211 (which may be optional) of step 1210, the host computer provides the user data by executing a host application. In step 1220, the host computer initiates a transmission carrying the user data to the UE. In step 1230 (which may be optional), the base station transmits to the UE the user data which was carried in the transmission that the host computer initiated, in accordance with the teachings of the embodiments described throughout this disclosure. In step 1240 (which may also be optional), the UE executes a client application associated with the host application executed by the host computer.

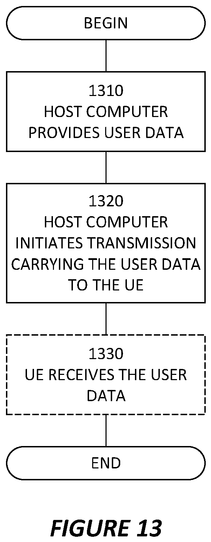

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step 1310 of the method, the host computer provides user data. In an optional substep (not shown) the host computer provides the user data by executing a host application. In step 1320, the host computer initiates a transmission carrying the user data to the UE. The transmission may pass via the base station, in accordance with the teachings of the embodiments described throughout this disclosure. In step 1330 (which may be optional), the UE receives the user data carried in the transmission.

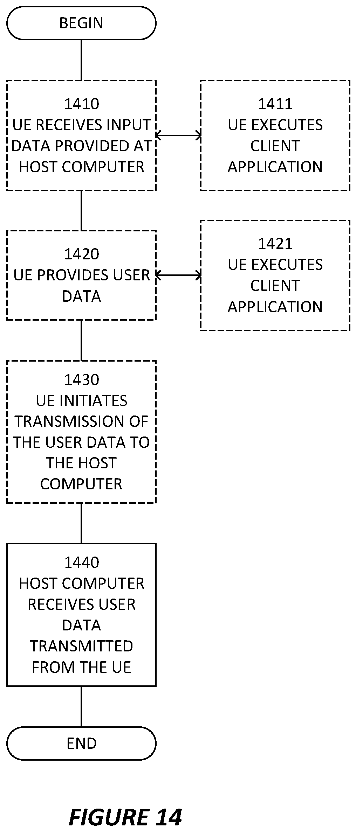

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step 1410 (which may be optional), the UE receives input data provided by the host computer. Additionally or alternatively, in step 1420, the UE provides user data. In substep 1421 (which may be optional) of step 1420, the UE provides the user data by executing a client application. In substep 1411 (which may be optional) of step 1410, the UE executes a client application which provides the user data in reaction to the received input data provided by the host computer. In providing the user data, the executed client application may further consider user input received from the user. Regardless of the specific manner in which the user data was provided, the UE initiates, in substep 1430 (which may be optional), transmission of the user data to the host computer. In step 1440 of the method, the host computer receives the user data transmitted from the UE, in accordance with the teachings of the embodiments described throughout this disclosure.

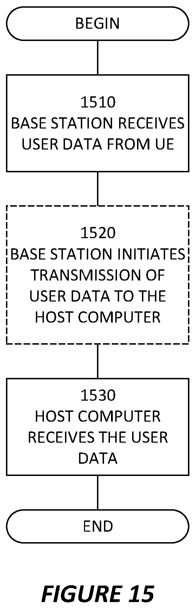

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step 1510 (which may be optional), in accordance with the teachings of the embodiments described throughout this disclosure, the base station receives user data from the UE. In step 1520 (which may be optional), the base station initiates transmission of the received user data to the host computer. In step 1530 (which may be optional), the host computer receives the user data carried in the transmission initiated by the base station.

## Claims

1. A method performed by a wireless device (12), the wireless device being configured with several bandwidth parts within a cell (14), the method comprising:
detecting (210) a problem on a bandwidth part (18) deployed within unlicensed frequency spectrum, wherein detecting the problem comprises detecting that a measure of channel occupancy within the bandwidth part and/or clear channel assessment failure within the bandwidth part (18) exceeds an occupancy or failure threshold; **characterized by**:
responsive to detecting the problem, switching (230) to, or requesting a switch to a different bandwidth part (20) within the cell (14); and
triggering a radio link failure, RLF, recovery, if the problem is detected in all configured bandwidth parts in the cell.

2. The method of claim 1, wherein triggering the radio link failure, RLF, recovery comprises performing a radio resource control, RRC, connection reestablishment carrying a failure reason indicating that the wireless device (12) is experiencing an LBT problem in the cell (14).

3. The method of any of claims 1-2, wherein the problem is consistent uplink listen-before-talk, LBT, failure on the bandwidth part (18), as defined by a measure of uplink LBT failure consistency.

4. The method of any of claims 1-3, wherein the measure is a function of:
a ratio of failed clear channel assessments to total clear channel assessments; and/or
a number of consecutive clear channel assessment failures.

5. The method of any of claims 1-4, wherein requesting the switch comprises performing, on the different bandwidth part (20) an uplink transmission that indicates or includes a problem report that reports the detected problem.

6. The method of claim 5, wherein the uplink transmission comprises a sounding reference signal, a random access transmission, a physical uplink control channel transmission, or a physical uplink shared channel transmission.

7. The method of claim 3, wherein the consistent UL LBT failure is detected by counting consecutive uplink LBT failure indications and identifying when the counted number of uplink LBT failure indications reaches a certain maximum allowed number.

8. The method of any of claims 1-7, wherein the problem is detected on a bandwidth part deployed within unlicensed frequency spectrum, and wherein said switching or requesting to switch comprises switching to, or requesting a switch to a different bandwidth part within the unlicensed frequency spectrum.

9. A wireless device (12, 400) comprising:
communication circuitry (420); and
processing circuitry (410), the processing circuitry being configured to perform the method of any of claims 1-8.

## Patentansprüche

1. Verfahren, das von einer drahtlosen Vorrichtung (12) durchgeführt wird, wobei die drahtlose Vorrichtung mit mehreren Bandbreitenteilen innerhalb einer Zelle (14) konfiguriert ist, wobei das Verfahren Folgendes umfasst:
Erkennen (210) eines Problems auf einem Bandbreitenteil (18), der innerhalb eines nicht lizenzierten Frequenzspektrums bereitgestellt wird, wobei das Erkennen des Problems Erkennen umfasst, dass ein Maß der Kanalbelegung innerhalb des Bandbreitenteils und/oder ein Kanalfreiheitsbeurteilungsfehler innerhalb des Bandbreitenteils (18) einen Belegungs- oder Fehlerschwellenwert überschreiten; **gekennzeichnet durch** Folgendes:
Umschalten (230) oder Anfordern einer Umschaltung auf einen anderen Bandbreitenteil (20) innerhalb der Zelle (14) in Reaktion auf das Erkennen des Problems;
Auslösen einer Wiederherstellung nach einem Funkverbindungsfehler, RLF, falls das Problem in allen konfigurierten Bandbreitenteilen in der Zelle erkannt wird.

2. Verfahren nach Anspruch 1, wobei das Auslösen der Wiederherstellung nach einem Funkverbindungsfehler, RLF, Durchführen einer Funkressourcensteuerungs-Verbindungswiederherstellung, RRC-Verbindungswiederherstellung, umfasst, die eine Fehlerursache überträgt, die angibt, dass die drahtlose Vorrichtung (12) ein LBT-Problem in der Zelle (14) hat.

3. Verfahren nach einem der Ansprüche 1-2, wobei das Problem ein konsistenter Uplink-Listen-Before-Talk-Fehler, Uplink-LBT-Fehler, auf dem Bandbreitenteil (18) ist, wie durch ein Maß für die Uplink-LBT-Fehlerkonsistenz definiert.

4. Verfahren nach einem der Ansprüche 1-3, wobei das Maß eine Funktion von Folgenden ist:
einem Verhältnis der fehlgeschlagenen Kanalfreiheitsbeurteilungen zu den gesamten Kanalfreiheitsbeurteilungen; und
einer Anzahl von aufeinanderfolgenden Kanalfreiheitsbeurteilungsfehlern.

5. Verfahren nach einem der Ansprüche 1-4, wobei das Anfordern der Umschaltung Durchführen einer Uplink-Übertragung, die einen Problembericht angibt oder umfasst, der das erkannte Problem meldet, auf dem anderen Bandbreitenteil (20) umfasst.

6. Verfahren nach Anspruch 5, wobei die Uplink-Übertragung ein Sondierungsreferenzsignal, eine Direktzugriffsübertragung, eine Physical Uplink Control Channel-Übertragung oder eine Physical Uplink Shared Channel-Übertragung umfasst.

7. Verfahren nach Anspruch 3, wobei der konsistente Uplink-LBT-Fehler erkannt wird, indem aufeinanderfolgende Uplink-LBT-Fehleranzeigen gezählt werden und identifiziert wird, wann die gezählte Anzahl von Uplink-LBT-Fehleranzeigen eine bestimmte maximal zulässige Anzahl erreicht.

8. Verfahren nach einem der Ansprüche 1-7, wobei das Problem auf einem Bandbreitenteil erkannt wird, der innerhalb eines nicht lizenzierten Frequenzspektrums bereitgestellt wird, und wobei das Umschalten oder Anfordern einer Umschaltung Umschalten oder Anfordern einer Umschaltung auf einen anderen Bandbreitenteil innerhalb des nicht lizenzierten Frequenzspektrums umfasst.

9. Drahtlose Vorrichtung (12, 400), umfassend:
Kommunikationsschaltungsanordnung (420); und
Verarbeitungsschaltungsanordnung (410), wobei die Verarbeitungsschaltungsanordnung zum Durchführen des Verfahrens nach einem der Ansprüche 1-8 konfiguriert ist.

## Revendications

1. Procédé réalisé par un dispositif sans fil (12), le dispositif sans fil étant configuré avec plusieurs parties de bande passante à l'intérieur d'une cellule (14), le procédé comprenant :
la détection (210) d'un problème sur une partie de bande passante (18) déployée à l'intérieur d'un spectre de fréquence sans licence, dans lequel la détection du problème comprend la détection qu'une mesure d'occupation de canal à l'intérieur de la partie de bande passante et/ou un échec d'évaluation de canal libre à l'intérieur de la partie de bande passante (18) dépassent un seuil d'occupation ou d'échec ; **caractérisé par** :
en réponse à la détection du problème, la commutation (230) à ou la demande d'une commutation à une partie de bande passante différente (20) à l'intérieur de la cellule (14) ; et
le déclenchement d'une reprise après défaillance de liaison radio, RLF, si le problème est détecté dans toutes les parties de bande passante configurées dans la cellule.

2. Procédé selon la revendication 1, dans lequel le déclenchement de la reprise après défaillance de liaison radio, RLF, comprend la réalisation d'un rétablissement de connexion de commande de ressources radio, RRC, portant une raison de défaillance indiquant que le dispositif sans fil (12) subit un problème LBT dans la cellule (14).

3. Procédé selon l'une quelconque des revendications 1 et 2, dans lequel le problème est une défaillance écouter avant de parler, LBT, de liaison montante constante sur la partie de bande passante (18), telle que définie par une mesure de constance de défaillance LBT de liaison montante.

4. Procédé selon l'une quelconque des revendications 1 à 3, dans lequel la mesure est une fonction de :
un rapport d'évaluations de canal libre ayant échoué sur le total des évaluations de canal libre ; et/ou
un nombre d'échecs d'évaluation de canal libre consécutifs.

5. Procédé selon l'une quelconque des revendications 1 à 4, dans lequel la demande de la commutation comprend la réalisation, sur la partie de bande passante différente (20), d'une transmission de liaison montante qui indique ou inclut un rapport de problème qui rapporte le problème détecté.

6. Procédé selon la revendication 5, dans lequel la transmission de liaison montante comprend un signal de référence de sondage, une transmission d'accès aléatoire, une transmission de canal de commande de liaison montante physique ou une transmission de canal partagé de liaison montante physique.

7. Procédé selon la revendication 3, dans lequel la défaillance de LBT UL constante est détectée par le comptage d'indications de défaillances de LBT de liaison montante consécutives et l'identification de quand le nombre compté d'indications de défaillances de LBT de liaison montante atteint un certain nombre autorisé maximal.

8. Procédé selon l'une quelconque des revendications 1 à 7, dans lequel le problème est détecté sur une partie de bande passante déployée à l'intérieur d'un spectre de fréquence sans licence, et dans lequel ladite commutation ou ladite demande de commutation comprend la commutation à ou la demande de commutation à une partie de bande passante différente à l'intérieur du spectre de fréquence sans licence.

9. Dispositif sans fil (12, 400) comprenant :
une circuiterie de communication (420) ; et
une circuiterie de traitement (410), la circuiterie de traitement étant configurée pour réaliser le procédé selon l'une quelconque des revendications 1 à 8.
